# EUROPEAN PATENT APPLICATION

(11) **EP 2 109 285 A1**
(43) Date of publication of application: **14.10.2009**
(21) Application number: 08300176.8
(22) Date of filing: 11.04.2008
(51) Int. Cl.: H04L 29/06

(54) **Conference system and method**

(71) Applicant: HEWLETT-PACKARD DEVELOPMENT COMPANY, L.P., Houston, TX 77070 (US)
(72) Inventor: Peuziat, Xavier, 38053, Grenoble Cedex 09 (FR); Bertin, Olivier, 06901, Sophia-Antipolis (FR); Huve, Frederic, 38053, Grenoble Cedex 09 (FR)
(74) Representative: Franks, Adam Peter

(57) **Abstract**

A server for receiving first user content from a first user and sending the first user content to at least one other user in a conference session; the server arranged to receive a first invite from the first user to create or join the conference session; add the first user to the conference session; and determine if the first invite contains information that identifies first media content; and if so, send the first media content to the at least one other user.

## Description

### Background to the Invention

Two or more users may participate in a voice or video conference session over an internet protocol (IP) network. A user may provide content to a server handling the conference session. Context must be established between the user and the server so that the content from the user can be identified to be associated with the conference session, as the server may also receive content from other users and/or in respect of other conference sessions.

It is an object of embodiments of the invention to at least mitigate one or more of the problems of the prior art.

### Brief Description of the Drawings

Embodiments of the invention will now be described by way of example only, with reference to the accompanying figures, in which:
Figure 1 shows an example of a system according to embodiments of the invention;
Figure 2 shows a first example of communications according to embodiments of the invention;
Figure 3 shows a second example of communications according to embodiments of the invention; and
Figure 4 shows an example of a Session Initiation Protocol (SIP) message according to embodiments of the invention.

### Detailed Description of Embodiments of the Invention

Embodiments of the invention simplify the act of sharing media content within a conference session conducted over an internet protocol (IP) network. Media content may comprise, for example, video content, audio content, images and/or other media content.

Media content may be shared in a conference session in embodiments of the invention. For example, the media content is sent to a conference server by a user participating in a conference session. The content is then sent to other users participating in the conference session. The media content may replace some or all of the content that is normally sent to the other users during a conference session. For example, in a video conference session each participating user sends video content to the conference server, for example from a webcam or other video capturing device. The conference server sends the video content from each user to all the other users. In this way, the video conference is effected between the users. One user may, for example, choose to replace the video content from the user's webcam or other video capture device with other media content comprising video content. This media content is sent to the conference server, and the conference server sends the media content to the other users in place of the video content from the user's webcam or other video capture device. Thus, the media content is shared by the user with the other users. The other users may see, for example in a software application for participating in a conference session, the user's video content from the webcam or other video capture device being replaced by the shared media content. The replacement may be temporary or permanent.

Invite messages may be used by users to create new conference sessions and join existing sessions. Embodiments of the invention enable media content sharing in a conference session by including information within invite messages. The information may identify media content that a user wishes to share with other users in a conference session. A user may include media content in an invite message that creates or first joins a conference session. Alternatively, in embodiments of the invention a user may issue a re-invite message in respect of the same conference session that identifies media content to be shared.

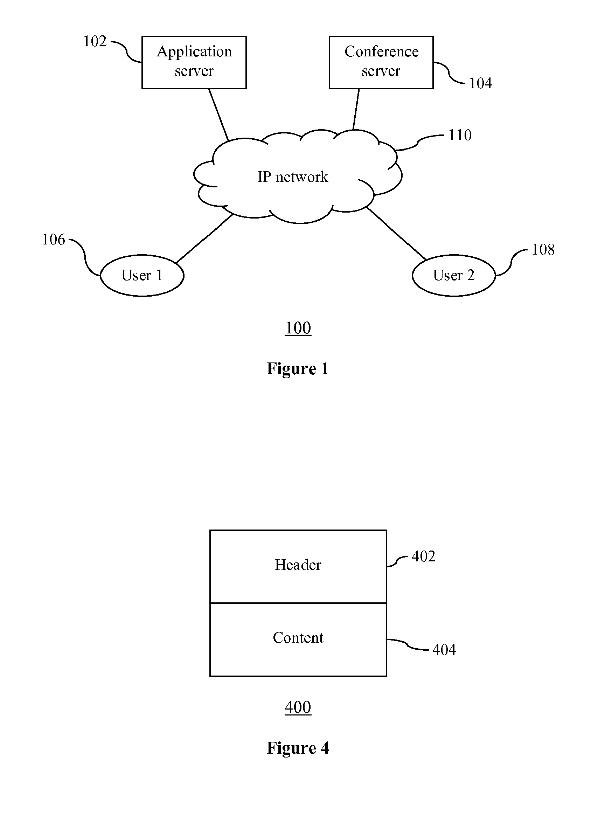

Figure 1 shows an example of a system 100 including an application server 102, conference server 104, first user 106 and second user 108. These may communicate with each other via an IP network 110. The first user 106 and/or second user 108, and/or any other user described herein, may in embodiments of the invention comprise a device (such as a data processing system or portable device) and/or software that is used to participate in a conference session.

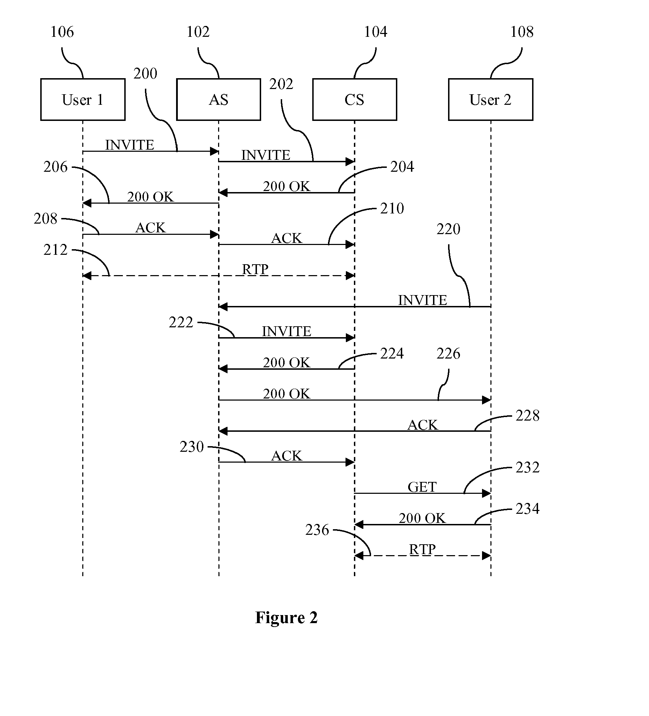

Figure 2 shows an example of communications exchanged between the first user 106, second user 108, application server (AS) 102 and conference server (CS) 104 when setting up conference sessions according to embodiments of the invention. The first communication is an invite message sent by the first user 106 to the application server. The invite message indicates that the first user 106 wishes to join a particular conference session (or create it if it does not already exist). The invite message may contain information that identifies the particular conference session.

For example, an invite message comprising a Session Initiation Protocol (SIP) INVITE message 200 is sent by the first user 106 to the application server 102. The SIP INVITE message 200 is addressed so as to identify a specific conference session. For example, the SIP INVITE message 200 is addressed to the SIP URI sip:conf=1234@as.hp.com. The first portion of the SIP URI, "conf=1234" indicates that the INVITE message 200 is sent by a user who wishes to join the conference session with the ID of 1234. The conference ID uniquely identifies the conference that the first user 106 wishes to join or create. The second part of the SIP INVITE message 200, "as.hp.com", identifies the application server (AS) 102. The Session Initiation Protocol (SIP) is defined by RFC 3261.

The application server 102 forwards the INVITE message 200 to the conference server 104. If a conference session with the ID of 1234 does not exist, the conference server 104 creates such a conference session.

The conference server 104 then sends a 200 OK message 204 to the application server 102, which forwards the message to the first user 106 as 200 OK message 206. Thus, the conference server 104 indicates to the first user 106 that the first user 106 can join the conference session with the ID of 1234. The first user 106 then sends an ACK acknowledgement message 208 to the application server 102, which forwards the message to the conference server 108 as ACK message 210. Thus, a session, such as RTP session 212, has been set up between the first user 106 and the conference server 104. The first user 106 and conference server 104 can now exchange information using the session 212.

For example, the first user 106 includes a user content capture device. The capture device captures first user content from the first user. The first user content may comprise information that is captured from the first user and that is to be sent to any other users in the conference session. For example, the capture device may comprise a webcam or other video capture device that captures video content from the user. The capture device may additionally or alternatively comprise an audio capture device such as a microphone. Thus, for example, the first user content comprises video content and/or audio content. The video content and/or audio content is sent to the conference server 104 using the RTP session 212 and is sent by the conference server 104 to other users (if any) participating in the same conference session.

At the point where the RTP session 212 is created in figure 2, there are no other users participating in the conference session with the ID of 1234. As shown in figure 2, a second user 108 subsequently sends a SIP invite message 220 to the application server 102. The SIP INVITE message 220 includes a SIP URI that identifies the conference session with the ID of 1234. For example, the SIP URI may comprise sip:conf=1234@as.hp.com.

The SIP INVITE message 220 contains or is associated with information that identifies media content. The media content is the content that the second user 108 wishes to supply to the conference server 104, so that instead of the user content captured from the second user 108 being sent to other users (such as the first user 106) in the conference session, at least some of the user content from the second user is replaced with the media content before being sent to the other users in the conference session. In certain embodiments of the invention, the user content is not sent to the conference server 104 at all, only the media content is to be sent by the conference server 104 to the other users in the conference session. In this case, the media content is sent to the other users in place of the user content. If some or all of the user content is sent to the conference server 104, then the media content may be sent by the conference server 104 to the other users in place of some or all of the user content. In this case, the user content (or the portion thereof that is replaced by the media content) may or may not be sent to the other users.

For example, the SIP INVITE message 220 may contain session description protocol (SDP) information. SDP is defined by RFC 4566. Figure 4 shows an example of a SIP message 400. The SIP message comprises a header part 402 and a content part 404. Session Description Protocol (SDP) information may be contained within the content part 404. The header part 402 may include information that specifies, for example, that the content part includes SDP information.

The SDP information identifies the media content that the second user 108 wishes to share with other users in the conference session. For example, the SDP content includes the following lines:
m=application/conference-avatar
a=url:http://user2.hp.com/my-avatar.jpg

Thus, for example, the media name and transport address contained in the first line above identifies that the media content to be shared is an avatar, i.e. an image. The attribute in the second line above provides a URL where the image is located.

The application server 102 forwards the message 220 to the conference server 104 as INVITE message 222. The conference server 104 knows that the conference session with the ID of 1234 already exists. Therefore, the conference server 104 sends a 200 OK message 224 to the application server 102, which forwards the message 224 to the second user 108 as 200 OK message 226. Thus the conference server 104 indicates to the second user 108 that the second user 108 can join the conference session. The second user 108 sends an acknowledgement ACK message 228 to the application server 102, which forwards the message 228 to the conference server as ACK message 230.

The conference server 104 now retrieves the second user's media content from the second user 108. For example, the media content may be transferred to the conference server 104 from the second user 108 using the HTTP (RFC 2616) or FTP (RFC 0959, 1579, 2228, 2428 and 3659) protocol, a media streaming protocol such as RTSP (RFC 2326), or some other protocol. Alternatively, the media content is transferred using a RTP session 236 set up as a result of messages exchanged between the second user 108, application server 102 and conference server 104. In embodiments of the invention, the content may optionally be retrieved from some other entity, for example a media server or other entity connected to or communicable from the IP network 110, instead of from the second user 108. In embodiments of the invention, the information contained within the invite message may specify the protocol to be used to retrieve the media content. For example, the second line of the SDP information given above specifies the HTTP protocol to be used to retrieve the image media content.

For example, where HTTP is used to retrieve the media content from the second user, the conference server sends a HTTP GET message 232 to the user that identifies or can be used to identify the media content. The second user 108 returns a HTTP 200 OK message 234 to the conference server 104. The OK message 234 contains the media content requested, for example within the content part of the message. The media content can thus be transferred from the second user 108 to the conference server 104. More details on the HTTP protocol and transferring the media content using HTTP can be found within the HTTP specification, RFC 2616.

Thus, the media content identified in the Invite message 220 replaces some or all of the user content from the second user 108 being sent to other users in the conference session, or is sent in place of some or all of the user content to the other users. For example, the second user's user content may comprise video and audio content from the user's video and audio capture devices. The media content identified in the Invite message 220 may comprise video content. Thus, the content sent to other users in the conference session comprises the video content from the identified media content and the audio content from the second user's audio capture device, such as a microphone. Alternatively, for example, the media content may comprise both video and audio content. Therefore, the media content may replace all of the content from the second user's capture devices before being sent to other users in the conference session. In certain embodiments of the invention, the content from the second user's capture devices may still be sent to the conference server 104 using the RTP session 236. However, in alternative embodiments, only some or none of the content from the capture devices may be transferred to the conference server. In these embodiments, bandwidth may be saved. For example, where the content from the user's capture devices includes video content, and the media content includes video content, the other users in the conference session may see the video content from the identified media content and not the content from the second user's video capture device. Therefore, the content from the video capture device may not be sent by the second user 108 to the conference server 104 while the media content is being shared in the conference session.

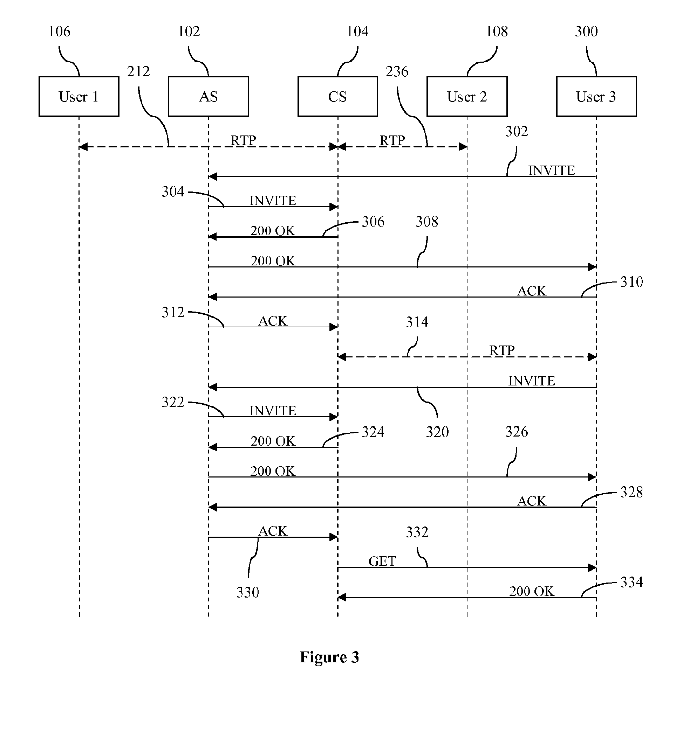

Figure 3 shows communications between the entities shown in figure 2, and also a third user 300. RTP session 212 exists between the first user 106 and the conference server 104 as indicated above, and RTP session 236 also exists between the second user 108 and the conference server 104 as indicated above.

The third user 300 wishes to join the conference session that has been joined by the first user 106 and second user 108. Thus, communications 302 to 312, which are substantially similar to communications 200 to 210 shown in figure 2, are exchanged between the third user 300, application server 102 and conference server 104. Thus, an RTP session 314 is set up between the third user 300 and the conference server 104. User content from the third user's capture devices (such as, for example, audio and/or video capture devices) is sent by the third user 300 to the conference server 104 using the RTP session 314, and the conference server 104 sends the third user's user content to the first user 106 and second user 108. The third user 300 receives the first user's user content and the second user's media content from the conference server 104. Thus, the third user 300 participates in the conference session.

At this point, the third user 300 may, for example, wish to share media content with the other users in the conference session, for example the second user 106 and third user 108. To do this, the third user 300 sends a SIP INVITE message 320 to the application server 102. The message 320 contains or is associated with information that identifies media content. For example, the SIP INVITE message 320 contains session description protocol (SDP) that identifies the media content. For example, the SDP information identifies the type of the media content and the URI where the content can be retrieved from.

For example, the third user 300 may include the following SDP information in the invite message 320:
m=application/conference-contentsharing
a=url:http://user3.hp.com/my-content.3gp

Thus, the third user 300 indicates that media content should be shared that comprises video content.

The application server 102 forwards the INVITE message 320 to the conference server 104 as INVITE message 322. The conference server 104 determines that the third user 300 has already joined the conference session with the ID of 1234, the ID being provided in the SIP URI contained within the INVITE messages 320 and 322 (and also within the INVITE messages 302 and 304). The conference server 104 thus sends a 200 OK message 324 to the application server 102, which forwards the message 324 to the third user 300 as 200 OK message 326. In response, the third user sends an ACK acknowledgement message 328 to the application server 102, which forwards the message 328 to the conference server 104 as ACK message 330.

Thus, the conference server 104 is informed by the third user 300 that the third user 300 wishes to share media content in the conference session. The conference server 104 thus retrieves the third user's content, for example from the third user 300 or a media server (not shown), and replaces at least some of the third user's user content with the media content before sending the content to the other users in the conference session, or sends the media content to the other users in place of at least some of the user content.

For example, as shown in figure 3, the conference server 104 retrieves the third user's media content using HTTP. The conference server 104 sends a HTTP GET message 332 to the third user 300, who returns the content within a HTTP 200 OK message 334.

If any party that shares media content in the conference session wishes to stop sharing the media content, then the user concerned sends an INVITE message to the conference server 104 via the application server 102. The INVITE message indicates to the conference server 104 that the user no longer wishes to share the media content previously shared. For example, the INVITE message does not contain SDP information, or contains SDP information that does not identify media content to be shared. In embodiments of the invention, for example, the "m=" field of the SDP information is empty. Thus, the conference server 104 sends the user content captured by the user's capture devices to other users in the conference session, and no longer sends the media content in place of some or all of the user content.

In the above description, the users and servers are shown as connected to a single IP network. However, embodiments of the invention may be implemented that use other networks. For example, the IP network may comprise multiple IP networks connected together. Alternatively, for example, instead of the IP network, there may be another type of network or multiple networks of a single or various types. Additionally or alternatively, where a message or communication is shown to be sent from one entity to another, for example from the first user to the application server, the message or communication may be sent via one or more intermediate nodes that are not shown. The intermediate nodes may comprise, for example, one or more other servers, routers, proxy servers and any other nodes that form part of the network used to send communications between entities.

Where a message is described being sent from a first entity to another in the above description, for example from the first user to the application server, the message may be made up from multiple messages (for example, a single SIP "invite" message may comprise multiple SIP messages, for example multiple SIP INVITE type messages or multiple messages of one or more types). Additionally or alternatively, each message may be broken up into multiple parts to be transmitted over the network, for example into multiple packets and/or flits.

Where RFC documents are referred to in the above description, for example the SIP RFC document RFC 3261, these documents are incorporated herein by reference for all purposes.

Certain messages (such as INVITE messages) are described as containing information such as SDP information that describes or indicates media content. These messages and/or other messages may contain other SDP information that is used for other purposes, for example purposes relating to implementation of the conference session.

The conference server 104 may be a video conference server, whereby users may participate in a video conference. Thus, for example, each user may send video and audio user content captured by capture devices to the conference server 104, which then sends the user content from each user to the other users in the video conference session. However, in alternative embodiments of the invention, other types of conference may be available in addition to or as an alternative to video conference sessions. For example, a voice conference session may be available for users to be involved in an audio conference, such as, for example, a voice over IP (VoIP) conference.

In embodiments of the invention, both the user content and the media content may be sent to other users in the conference session. For example, where a user in a video conference session shares media content comprising video, the other users in the video conference session may be able to view both the user's user content (comprising, for example, a video of the user from the user's video capture device) and the shared media content, as both the user content and the media content is sent to the other users by the conference server 104.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A system (102, 104) for receiving first user content from a first user (106) and sending the first user content to at least one other user (108) in a conference session; the system arranged to:
receive a first invite from the first user to create or join the conference session;
add the first user to the conference session; and
determine if the first invite contains information that identifies first media content; and if so, send the first media content to the at least one other user.

2. A system as claimed in claim 1, arranged to receive an additional invite from the first user (106); and determine if the additional invite contains information that identifies additional media content; and if so, send the additional media content to the at least one other user.

3. A system as claimed in claim 1 or 2 for receiving second user content from a second user (108) and sending the second user content to the first user (106) and the at least one other user in the conference session; the system arranged to:
receive an invite from the second user;
add the second user to the conference session; and
determine if the second invite contains information that identifies second media content; and if so, send the second media content to the first user.

4. A method of sharing content in a conference session, the method comprising:
receiving a first invite from a first user (106) to create or join the conference session;
adding the first user to the conference session; and
determining if the first invite contains information that identifies first media content; and if so, sending first media content from the first user to at least one other user (108).

5. A method as claimed in claim 4, comprising: receiving an additional invite from the first user (106); and determining if the additional invite contains information that identifies additional media content; and if so, sending the additional media content to the at least one other user (108).

6. A method as claimed in claim 4 or 5 comprising:
receiving an invite from a second user (108);
adding the second user to the conference session; and
determining if the second invite contains information that identifies second media content; and if so, sending second media content from the second user to the first user (106).

7. A system as claimed in any of claims 1 to 3, or a method as claimed in any of claims claim 4 to 6, wherein the information in the first invite comprises session description protocol (SDP) information identifying the first media content, and/or the first invite comprises a session initiation protocol (SIP) INVITE message.

8. A method of participating in a conference session; the method comprising:
receiving a request from a user (106) to share media content with at least one other user (108) in the conference session; and
sending an invite to a conference server, the invite containing information that identifies the media content.

9. A computer program comprising code for implementing the method of any of claims 4 to 8.

10. Computer readable storage storing a computer program as claimed in claim 9.
